# EUROPÄISCHE PATENTSCHRIFT

(11) **EP 1 115 986 B1**
(45) Veröffentlichungstag und Bekanntmachung des Hinweises auf die Patenterteilung: **16.07.2003**
(21) Anmeldenummer: 99955710.1
(22) Anmeldetag: 14.09.1999
(51) Int. Cl.: F16D 65/16, F16D 65/56

(54) **ELEKTROMECHANISCHE KRAFTFAHRZEUG-BREMSVORRICHTUNG**
ELECTROMECHANICAL VEHICLE BRAKING DEVICE
SYSTEME DE FREINAGE ELECTROMECANIQUE DE VEHICULE

(30) Priorität: 21.09.1998 DE 19843178; 12.08.1999 DE 29914060 U
(43) Veröffentlichungstag der Anmeldung: 18.07.2001
(73) Patentinhaber: SIEMENS AKTIENGESELLSCHAFT, 80333 München (DE)
(72) Erfinder: DÖRICHT, Michael, D-93138 Lappersdorf (DE); SCHMID, Rainer, D-93059 Regensburg (DE)
(86) Internationale Anmeldenummer: DE9902930
(87) Internationale Veröffentlichungsnummer: WO00017537

(56) Entgegenhaltungen:
- EP-A- 0 208 098
- DE-A- 19 529 664
- DE-A- 19 644 441
- US-A- 4 553 644
- US-A- 5 155 997
- US-A- 5 782 322

## Beschreibung

Die Erfindung betrifft eine elektromechanische Kraftfahrzeug-Bremsvorrichtung gemäß Patentanspruch 1.

Durch die DE 196 44 441 A1 ist eine elektromotorisch betätigte Kraftfahrzeug-Bremsvorrichtung bekannt, wobei der Elektromotor über einen linear arbeitenden Gewindetrieb und einen hydraulischen Stempel in einer zylindrischen Bohrung eines Radbremsaktors auf das jeweilige Bremsglied einwirkt; zum Ausgleich eines Bremsbelagverschleisses und des dadurch bedingten vergrößerten Verstell-Hubweges ist das Volumen des hydraulischen Stempels aus einem Hydraulik-Reservoir nachfüllbar. Die Hydraulik-Flüssigkeit fließt über ein gesondertes, nur bei nicht betätigter Bremse zu öffnendes, Ventil durch mehrere Kanäle und steht somit mit diesen als auch dem thermisch hoch belasteten Bremskolben in direktem abriebverschmutzenden Kontakt; mehrfach vorgesehene Dichtungen bedingen zudem die Gefahr von Undichtigkeiten, Feuchtigkeits- und Schmutzeintrag.

Durch die DE 196 15 186 C1 ist eine Kraftfahrzeug-Bremsvorrichtung bekannt, die an jedem Rad einen an dem Bremssattel des Rades montierten elektromechanischen Radbremsaktor aufweist, welcher eine in Achsrichtung angetriebene Spindel und einen Elektromotor enthält. Der Läufer des Elektromotors ist als Spindelmutter eines Spindelgetriebes ausgebildet, das die Drehbewegung des Läufers in eine Linearbewegung der Spindel umsetzt. Die Axialkraft der Spindel wird durch eine mechanische Übersetzung vervielfacht und auf einen Kolben eines Radbremszylinders übertragen.

In der DE 196 29 936 A1 ist eine elektromechanische Bremsvorrichtung beschrieben, bei der eine Nachstellung durch einen selbsttätigen Mechanismus geschieht. Zur Kraftvervielfachung und Kraftübertragung ist ein Hebelmechanismus vorgesehen, auf den eingangsseitig die Axialkraft einer Spindelstange wirkt und der ausgangsseitig auf die Druckplatte eines Übertragerteils der Nachstellvorrichtung wirkt. Bedingt durch punktförmige Belastungsstellen am Hebel können hohe spezifische Flächenpressungen an den Auf- und Widerlagern der Hebelstangen entstehen, welche den Einsatz hochwertiger Werkstoffe für die Hebelstangen und Lagerstellen erfordern.

Der Erfindung liegt die Aufgabe zugrunde, eine Kraftfahrzeug-Bremsvorrichtung zu schaffen, die trotz einfacher Selbstnachstellung bei großer Kompaktheit und Wartungsfreundlichkeit eine einfache Fertigungs- bzw. Montagetechnik gewährleisten kann.

Diese Aufgabe wird erfindungsgemäß durch eine Bremsvorrichtung gemäß Patentanspruch 1 gelöst; vorteilhafte Weiterbildungen der Erfindung sind jeweils Gegenstand der Unteransprüche.

Eine elektromechanische Kraftfahrzeug-Bremsvorrichtung mit den beiden ersten Teilmerkmalen des Anspruchs 1 und mit einer die Bremskraft verstärkenden hydraulischen Übersetzungsvorrichtung zwischen dem Spindeltrieb und dem Bremskolben ist durch die DE 195 29 664 A1 bekannt.

Durch die US-A-5 155 997 ist ein linearer Übertragungs-Aktuator mit einer Flüssigkeits-Übersetzungseinrichtung bekannt, wobei insbesondere zur Vermeidung von Leckage-Verlusten die inkompressible Flüssigkeit in eine geschlossene Kapsel aus elastischem Material eingeschlossen ist.

Durch die vollständige Membran-Abkapselung des Fluidmediums ist ein sicherer dauerhafter Schutz gegen jeden Schmutz- bzw. Feuchtigkeitseintrag gewährleistet; einzelne, gesondert zu montierende und auch bei Reibgleitung für einen dauerhaften Abschluß auszulegende Dichtungselemente entfallen. Bei kompaktem Bauraum und geringem Gewicht ist gleichzeitig anstelle einer unvorteilhaften punktuellen Kraftübertragung und Kraftvervielfältigung bei bekannten Hebelmechanismen vorteilhaft eine flächenförmige Krafteinleitung und Kraftübertragung bei gleichzeitig hohem Verstärkungsgrad erreichbar und eine Elastizität zum nachstellenden Ausgleich eines Bremsbelagverschleißes gewährleistet. Durch die erfindungsgemäß vorgesehene Anbindung einer Membran-Einfüllöffnung an einen, vorzugsweise als Verlängerung der Spindel eines bremskraftbetätigten Elektromotors, getrennt anmontierbaren Spindelkolben ist eine Erstbefüllung auf fertigungs- und montagetechnisch besonders einfache Weise möglich.

Die Erfindung sowie weitere vorteilhafte Ausgestaltungen der Erfindung werden im folgenden anhand von Ausführungsbeispielen in der Zeichnung näher erläutert; darin zeigen:
- FIG 1: eine schematische Gesamt-Darstellung einer Kraftfahrzeug-Bremsvorrichtung mit elektromechanischen Radbremsaktoren;
- FIG 2: eine der in der Bremsvorrichtung gemäß FIG 1 verwendeten erfindungsgemäßen Betätigungsvorrichtungen in einer axialen Schnittansicht;
- FIG 3: einen vergrößerten Detailausschnitt aus FIG 2 im Bereich der Anbindung der Membran an einen elektromechanisch axial verschiebbaren Spindelkolben.

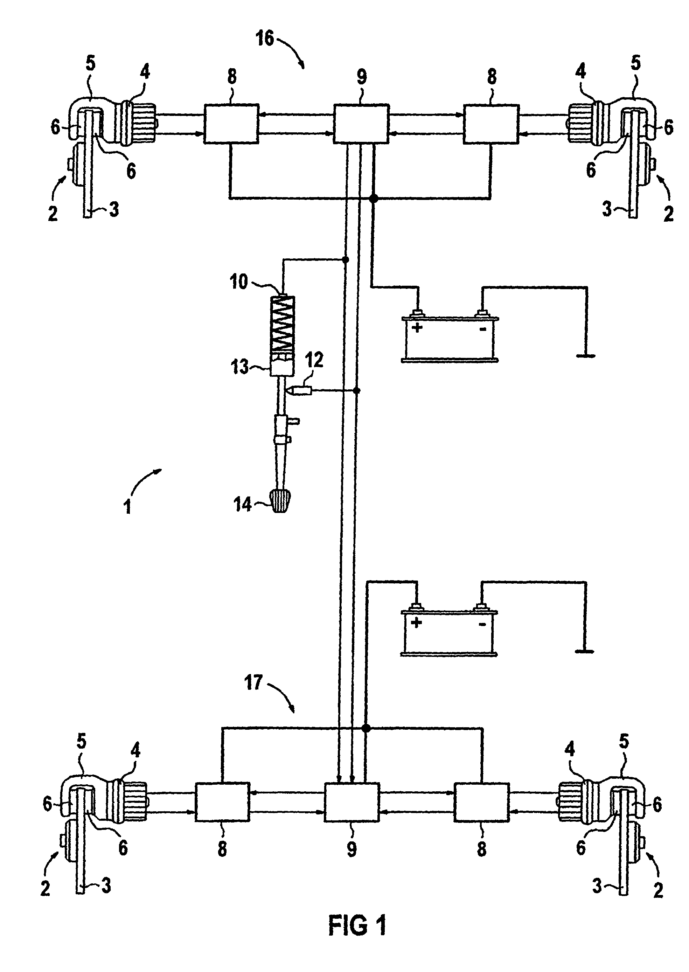

Gemäß FIG 1 enthält eine Bremsvorrichtung 1 für ein Kraftfahrzeug vier Bremsen 2, die je eine Bremsscheibe 3 und eine Betätigungsvorrichtung in Gestalt eines Radbremsaktors 4 mitumfassen. Die Radbremsaktoren 4 sind in je einen zugehörigen Bremssattel 5 integriert, d.h. mit ihm zu einer Baueinheit zusammengefaßt. Der Bremssattel 5 ist als Schwimmsattel ausgebildet. Über Bremsbeläge 6 wird bei Betätigung des Radbremsaktors 4 jeweils ein Bremsmoment auf die Bremsscheibe 3 ausgeübt.

Jeder Radbremsaktor 4 verfügt über eine Leistungs- und Steuerelektronik 8, die von einem zugehörigen Steuergerät 9 mit Steuersignalen, zum Beispiel für das Sollmoment eines noch zu beschreibenden Radbremsaktormotors, versorgt wird und an das Steuergerät 9 Rückmeldegrößen, zum Beispiel über das Istmoment des Radbremsaktormotors, übermittelt.

Die Leistungs- und Steuerelektronik 8 erhält von dem Radbremsaktor 4 ebenfalls Rückmeldegrößen, zum Beispiel über die Motordrehzahl oder den Motordrehwinkel des Radbremsaktormotors oder über die Anpresskraft der Bremsbeläge. Die Sollgrößen für jeden Radbremsaktor werden von der Steuereinheit 9 aus Meßgrößen ermittelt, die von verschiedenen Sensoren geliefert werden, zum Beispiel einem Kraftsensor 10 und einem Wegsensor 12, mit denen ein Pedalkraftsimulator 13 versehen ist, der durch das Bremspedal 14 des Kraftfahrzeugs betätigt wird. Der Pedalkraftsimulator 13 setzt die Bewegung des Bremspedals 14, d.h. die von dem Fahrer wie gewohnt ausgeübte Kraft und den Pedalweg, in elektrische Signale um, die dem Steuergerät 9 zugeführt werden und Sollwerte für die Bremsen 2, insbesondere für die Fahrzeugverzögerung und das auf die Bremsscheiben aufzubringende Dreh- oder Bremsmoment, darstellen. Zum Berechnen der Sollwerte bei einem Eingriff von Antiblockier- oder Fahrstabilitätsregelungen werden von dem Steuergerät 9 weitere Sensorsignale, zum Beispiel der Querbeschleunigung oder der Gierwinkelgeschwindigkeit und der Raddrehzahlen, ausgewertet.

Die Bremsvorrichtung 1 weist zwei Bremskreise 16 und 17 auf, die auf die Vorderachse und die Hinterachse des Kraftfahrzeuges aufgeteilt sind. Eine ebenfalls alternativ mögliche Diagonalbremskreisaufteilung unterscheidet sich hiervon nur durch eine veränderte Zuordnung der Radbremseinheiten zu den Steuergeräten und Energieversorgungen. Jeder Bremskreis 16, 17 verfügt über ein eigenes Steuergerät 9 und eine eigene Energieversorgung in Form je einer Batterie Bat. 1 bzw. Bat. 2. Die Energieversorgungen und die Steuereinheiten können dabei jeweils in einem Gehäuse untergebracht werden, müssen dann aber funktionell voneinander getrennt sein.

Versorgungsleitungen sind in der FIG 1 stark liniert und nicht mit Pfeilen versehen; Steuerleitungen sind schwach liniert eingezeichnet und mit Pfeilen entsprechend der Signalflußrichtung versehen.

Die beiden unabhängig voneinander arbeitenden Steuergeräte 9 können über eine bidirektionale Signalleitung miteinander kommunizieren und dadurch den Ausfall eines Bremskreises 16 oder 17 in dem jeweils anderen Bremskreis erkennen und ggf. geeignete Notmaßnahmen ergreifen. Die Bremsanlage kann auch um ein drittes - hier nicht dargestelltes - Steuergerät, das als Supervisor die beiden Bremskreissteuergeräte überwacht, ergänzt werden.

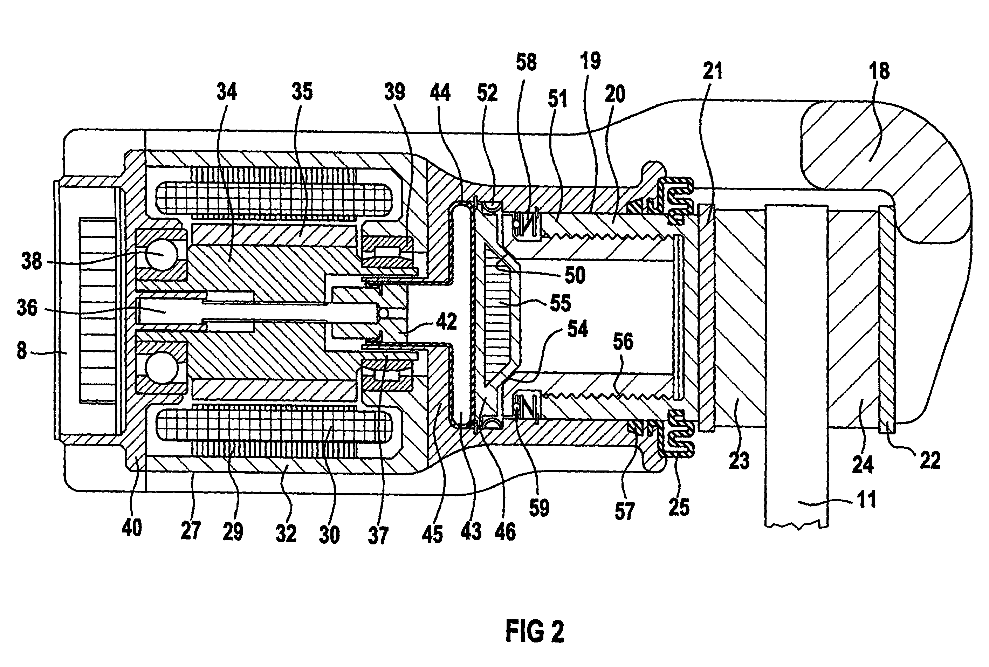

Gemäß FIG 2 ist ein Radbremsaktor direkt an einem Bremssattelgehäuse 18 montiert. Dieses weist eine zylindrische Bohrung 19 auf, in der ein verschiebbarer Bremskolben 20 geführt wird. Der Bremskolben 20 drückt auf einen ersten plattenförmigen Bremsbelagträger 21 mit einem inneren Bremsbelag 23 und aufgrund der schwimmenden Lagerung des Bremssattels mit gleicher Kraft auf einen zweiten plattenförmigen Bremsbelagträger 22 mit einem äußeren Bremsbelag 24. Die Bremsbeläge werden an eine Bremsscheibe 11 angepreßt und erzeugen in an sich bekannter Weise aufgrund der Reibung zwischen den Bremsbelägen 23 und 24 und der Bremsscheibe 11 ein Bremsmoment, welches über einen hier nicht dargestellten Halter auf das Kraftfahrzeug übertragen wird und zur Abbremsung führt. Eine balgförmige Staubschutzdichtung 25 verhindert das Eindringen von Schmutz, Feuchtigkeit und Belagabrieb in die zylindrische Bohrung 19.

Zur Bremsbetätigung und damit zur Erzeugung einer auf den inneren Bremsbelag 23 und den äußeren Bremsbelag 24 einwirkenden Kraft dient ein über die Steuer- und Leistungselektronik 8 ansteuerbarer Elektromotor 27, beispielsweise in Form eines hier vorgesehenen elektronisch kommutierten Gleichstrommotors. Der Ständer des Elektromotors 27 besteht aus einem Ständerteil 29, in dessen Nuten Wicklungen 30 eingebracht sind. Das Ständerteil 29 ist mit einem Motorgehäuse 32 fest verbunden. Der Läufer des Elektromotors 27 besteht aus einer Spindelmutter 34 eines Rollengewindetriebes, auf die Läufermagnete 35 aufgebracht sind. Der Rollengewindetrieb setzt die Drehbewegung der Spindelmutter 34 in eine Längsbewegung einer Spindel 36 um. Dementsprechend wird das Motordrehmoment in eine Axialkraft der Spindel 36 umgewandelt. Aufbau und Funktionsweise von Rollengewindetrieben sind bekannt (siehe z.B. Druckschrift RGT der INA Lineartechnik oHG).

Zur radialen Führung sowie zur Aufnahme der Axialkräfte ist die Spindelmutter 34 auf Lagern gelagert, im Ausführungsbeispiel auf einem Schrägkugellager 38 und einem Radial-Zylinderrollenlager 39. Die Axialkraft der Spindel 36 wird im Rollengewindetrieb auf die Spindelmutter 34 übertragen und über das Schrägkugellager 38 in einen mit dem Motorgehäuse 32 fest verbundenen, Gehäuseboden 40 eingeleitet.

Die Axialkraft der Spindel 36 wirkt auf einen Spindelkolben 42, der in einer axialen zylindrischen Bohrung 37 des Gehäusebodens 45 des Bremssattelgehäuses 18 geführt ist. Die rechte Stirnseite des Spindelkolbens 42, d. h. seine der Spindel 36 abgewandte Seite, wirkt auf ein Fluidvolumen 43, das in einer verformbaren Membran 44 dicht eingeschlossen und somit vollständig von der Umwelt getrennt ist. Die Membran 44 ist beutelartig oder sackartig ausgebildet und auf dem Außenumfang des Spindelkolbens 42 druckdicht befestigt.

Das Fluidvolumen 43 stützt sich auf der einen, dem Spindelkolben 42 zugewandten, Stirnseite radial außenseitig an einem Gehäuseboden 45 des Bremssattelgehäuses 18 sowie an der anderen, dem Spindelkolben 42 abgewandten, Stirnseite an einer in dem Bremssattelgehäuse 18 fixierten Druckplatte 46 ab, deren Querschnitt wesentlich größer ist als der des von der Membran-Einfüllöffnung umschlossenen Spindelkolbens 42. Nach dem hydrostatischen Prinzip wird die Axialkraft der Spindel 36 und des Spindelkolbens 42 durch diese Anordnung vervielfacht, wodurch sich die Anforderungen an das Drehmoment des Elektromotors 27 reduzieren und die Reibungskräfte in den Lagern 38, 39 vermindert werden.

Das Fluidvolumen 43 bildet zusammen mit den umschließenden und abstützenden Teile 44, 45, 42 und 46 ein Fluidgetriebe 42-46, das mit einem äußerst guten Wirkungsgrad und nahezu verschleißfrei arbeitet. Durch die flächige Krafteinleitung und Kraftweitergabe werden Probleme mit zu hohen Flächenpressungen und mit unsymmetrischen Kraftverteilungen zuverlässig vermieden. Durch die Membran-Kapselung wird eine Alterung des Fluids durch Eindringen insbesondere von Feuchtigkeit und von Schmutz vermieden, wodurch die Eigenschaften des Fluids über die gesamte Lebensdauer des Radbremsaktors weitgehend unverändert bleiben. Als Fluid kann eine gebräuchliche Bremsflüssigkeit oder auch ein gelartiges Fluid verwendet werden.

Die durch das Fluidgetriebe 42-46 vervielfachte Kraft der Spindel 36 wird auf die Druckplatte 46 übertragen, die ein erstes Konusteil 50 mit einen inneren konisch verlaufenden Rand aufweist. Sie ist in dem Bremssattelgehäuse 18, das mit dem Motorgehäuse 32 fest verbunden ist, verdrehsicher gelagert und bewegt sich unter dem Einfluß der von dem Fluidgetriebe auf sie ausgeübten Kraft in Längsrichtung auf ein Übertragerteil 51 zu. Dabei wird eine erste Feder 52 zusammengedrückt. Liegt die Druckplatte 46 mit ihrem ersten Konusteil 50 an einem korrespondierenden zweiten Konusteil 54 des Übertragerteils 51 an, so entsteht eine kraftschlüssige Verbindung zwischen diesen beiden Teilen. Durch die Reibung zwischen den beiden Konusteilen 50 bzw. 54 wird eine Drehbewegung des Übertragerteils 51 verhindert, da - wie erwähnt - die Druckplatte 46 nur in axialer Richtung verschiebbar ist. In die Druckplatte 46 ist ein Kraftsensor 55 zur Messung der Kraft, die auf die Druckplatte 46 wirkt, eingebaut. Das Sensorsignal wird von der Steuer- und Leistungselektronik 8 des Radbremsaktors ausgewertet.

Das Übertragerteil 51 und der Bremskolben 20 sind mit einer Steilgewindepaarung 56 versehen, die nicht selbsthemmend ist. Der Bremskolben 20 wird durch eine geeignete Sicherung an seiner Stirnseite - d. h. seiner dem inneren Bremsbelag 23 zugewandten Seite - an dem ersten Bremsbelagträger 21 gegen Verdrehung gesichert, beispielsweise durch hier nicht dargestellte Vertiefungen, in die nicht dargestellte Zapfen des ersten Bremsbelagträgers 21 eingreifen. Der Bremskolben 20 kann sich somit nur in Axialrichtung bewegen. Da der Bremskolben 20 und der Übertragerteil 51 verdrehgesichert sind, wird die Kraft von der Druckplatte 46 über die Steilgewindepaarung 56 auf den Bremskolben 20 und somit auf dem inneren Bremsbelag 23 übertragen. Ein elastisch verformbarer Kolbendichtring 57 haftet auf dem Bremskolben 20, solange dessen Weg in Längsrichtung ein vorgegebenes Maß - beispielsweise 1 mm - nicht überschreitet.

Der Verformungsweg des Kolbendichtrings 57 ist so bemessen, daß bei normalem Lüftspiel durch die Aufweitung des Bremssattelgehäuses 18 und die Kompression der Bremsbeläge 23, 24 unter Krafteinfluß die Haftgrenze zwischen dem Kolbendichtring 57 und dem Bremskolben 20 nicht überschritten wird, der Kolbendichtring 57 sich also nur elastisch verformt. Ergibt sich jedoch infolge von Belagverschleiß ein längerer Weg des Bremskolbens 20, so gleitet der Kolbendichtring 57 nach Überschreiten der Verformungsgrenze ein Stück auf dem Bremskolben 20 und gleicht damit den Belagverschleiß aus. Damit die Spindel 36 bei der Rückkehr in ihre vom Belagverschleiß unabhängige Ruhelage den Bremskolben 20 nicht wieder vollständig zurückzieht, ist die Steilgewindepaarung zwischen dem Übertragerteil 51 und dem Bremskolben 20 nicht selbsthemmend ausgestaltet.

Ist bei einer Entlastung der Bremse nach einer Bremsbetätigung eine Nachstellung zum Ausgleich des Belagverschleisses erfolgt, bewegt sich der Bremskolben 20 in Längsrichtung soweit zurück, bis der Kolbendichtring 57 in seine Ruhestellung gelangt ist. Eine Nut in dem Kolbendichtring 57 ist so gestaltet, daß eine elastische Verformung des Kolbendichtrings 57 nur bei einer Bewegung des Bremskolbens zum Zugreifen der Bremse möglich ist, nicht jedoch bei einem Rückhub des Bremskolbens 20 über die Ruhestellung des Kolbendichtrings 57 hinaus. Der Kolbendichtring 57 hält nun den Bremskolben 20 fest, während sich die Spindel 36 mit dem Spindelkolben 42 noch weiter in ihre verschleißunabhängige Ruhestellung zurückbewegt und somit die Druckplatte 46 vollständig entlastet. Dabei wird durch die erste Feder 52 die Druckplatte 46 von dem Übertragerteil 51 abgehoben und somit auch die Verdrehsicherung des Übertragerteils 51 aufgehoben.

Der Bremskolben 20 wird durch den Kolbendichtring 57 festgehalten. Eine zweite Feder 58 drückt nun über ein Axiallager 59 auf das Übertragerteil 51 und versetzt dieses wegen der nicht selbsthemmenden Steilgewindepaarung 56 in Drehung. Das Übertragerteil 51 wandert durch diese Drehbewegung in Längsrichtung aus dem Bremskolben 20 heraus, bis es wieder über die Konusteile 50, 54 an der Druckplatte 46 zum Anliegen kommt. Damit ist der Verschleiß der Bremsbeläge 23;24 ausgeglichen, der Bremskolben 20 ist um den Verschleißweg aus der Zylinderbohrung 19 im Bremssattelgehäuse 18 herausgewandert. Der Kolbendichtring 57 bildet somit zusammen mit der nicht selbsthemmenden Steilgewindepaarung 56 zwischen dem Übertragerteil 51 und dem Bremskolben 20 sowie den ersten und zweiten Federn 52;58 eine Nachstellvorrichtung zum Ausgleichen des Bremsbelagverschleißes.

Nach einem Austausch der Bremsbeläge 23, 24 muß der Bremskolben 20 wieder in das Bremssattelgehäuse 18 hineingeschoben werden. Dies wird mit einem Werkzeug erreicht, das in Vertiefungen auf der Stirnseite des Bremskolbens 20 greift und mit dem der Bremskolben 20 wieder in die Zylinderbohrung 19 hineingedreht und dabei auf das Übertragerteil 51 geschraubt wird.

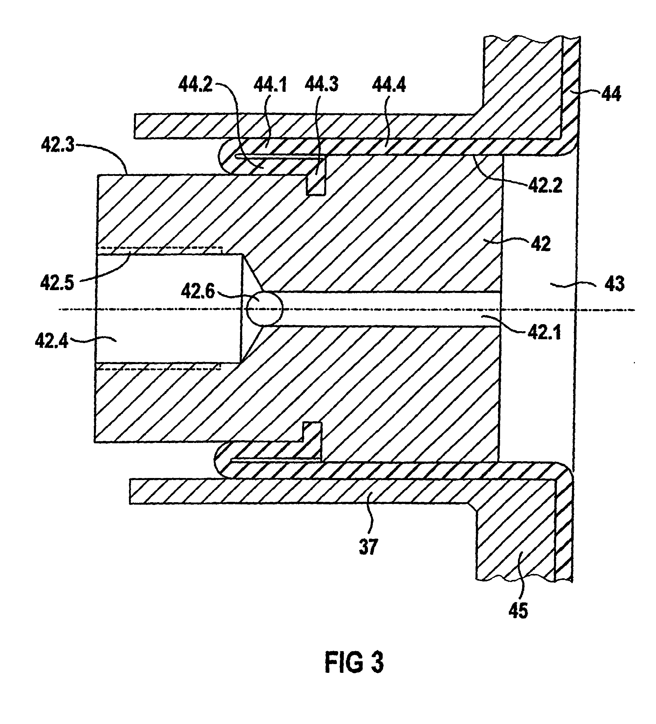

Wie insbesondere aus der Ausschnittsvergrößerung gemäß FIG 3 entnehmbar, ist zur fertigungs- als auch montagetechnisch besonders einfachen einmaligen Erstbefüllung der Membran 44 diese mit einer flaschenhalsartigen, vorzugsweise einstückig angeformten Membran-Einfüllöffnung 44.1-44.4 versehen, die am Außenumfang eines von dem Spindeltrieb 34,36 axial in der axialen Bohrung 37 des Gehäusebodens 45 des Bremssattelgehäuses 18 verschiebbaren Spindelkolbens 42 befestigbar ist.

Zur besonders guten Anpassungsfähigkeit der Membran 44 an entsprechend lange axiale Hubwege des Spindelkolbens 42 aufgrund der hydrostatischen Kraftvervielfältigung weist die flaschenhalsartige Einfüllöffnung der Membran 44 nach Art eines Falt- bzw. Rollbalges an ihrem freien Ende einen gegenüber einem radial äußeren bremsgehäuseteilseitigen Membranwandteil 44.1 zurückfalt- bzw. zurückrollbaren radial inneren parallelen, axial mit dem Spindelkolben 42 bewegbaren spindelkolbenseitigen Wandteil 44.2 auf; dieser spindelkolbenseitige Wandteil 44.2 ist mit einem Befestigungsende 44.3, insbesondere durch formschlüssige Einsteckfixierung in eine nutartige Vertiefung, am Spindelkolben 42 fixiert.

Nach einer Ausgestaltung der Erfindung ist der Spindelkolben 42 außenumfangsseitig radial abgesetzt in einen ersten bremsseitigen radial weiteren, nur einen von einer Umfaltung freien Wandteil 44.4 der Einfüllöffnung gegen die axiale Bohrung 37 des Gehäusebodens 45 anlegenden Spindelkolbenteil 42.2 und in einen radial engeren, sowohl den äußeren bremsgehäuseteilseitigen Membranteil 44.1 als auch den dazu parallelen, zurückgefalteten bzw. zurückgerollten bremskolbenseitigen Wandteil 44.2 gegen die axiale Bohrung 37 des Gehäusebodens 45 anlegenden Spindelkolbenteil 42.3.

Im Spindelkolbenbereich 42.3 mit dem kleineren radialen Durchmesser ist die Membran 44 im Bereich ihrer Membran-Einfüllöffnung derart zurückgefaltet bzw. zurückgerollt, daß sie doppelschichtig einerseits an der Mantelfläche des Spindelkolbens 42 anliegt und sich andererseits an die axiale Bohrung 37 des Gehäusebodens 45 anschmiegt.

Der Durchmesser des Spindelkolbenbereichs 42.2 mit dem größeren Durchmesser ist vorteilhaft derart bemessen, daß er mit minimalem Dichtungsabstand innerhalb der Membran 44 gleiten kann und die Membran 44 in diesem Bereich der Einfüllöffnung eine Dichtung gegenüber dem axial anschließenden Bereich der gefalteten radial übereinanderliegenden Membranteile bildet; dabei wird in vorteilhafter Weise eine Schmierung des Spindelkolbens 42 durch das Fluidmedium 43 gewährleistet, wodurch der Verschleiß der Membran 44 im Bereich der Anlage an den Spindelkolben 42 gemindert und gleichzeitig ein Entweichen des in den Membran 43 aufgebauten Druckes in den gefalteten Bereich vermeidbar ist.

Zur fertigungs- und montagetechnisch einfachen Befüllung der Membran 44 mit einem Fluidmedium 43 dient eine axiale Einfüllbohrung 42.1 in dem Spindelkolben 42 mit einer Ausgangsöffnung zu dem Innerem der Membrane 45 an ihrem einen Ende und mit einer, gegebenenfalls durch ein Verschlußstück 42.6 nach Einfüllen des Fluidmediums verschließbaren, Beschikkungsöffnung an ihrem anderen Ende. Das Einfüllen kann in vorteilhafter Weise erst dann erfolgen, wenn die Druckplatte 46, die Nachstellvorrichtung 51 und die noch unbefüllte Membran 44 in das Bremssattelgehäuse 18 eingebracht und der Spindelkolben 42 mit aufgesteckter, befestigter und gefalteter Einfüllöffnung in die axiale Bohrung 37 des Gehäusebodens 45 eingesteckt ist.

Auch für einen ungehinderten Zugang zu der Beschickungsöffnung der Einfüllbohrung 42.1 ist der Spindelkolben 42 als getrenntes Bauteil, vorzugsweise nach Einfüllen des Fluidvolumens, mit der drehfest fixierten Spindel 36 des Spindeltriebs 34,36, insbesondere durch eine Schraubverbindung 42.5 in einer Einsteckaufnahme 42.4 des Spindelkolbens 42, verbindbar.

## Patentansprüche

1. Elektromechanische Kraftfahrzeug-Bremsvorrichtung, enthaltend
- eine von einem Bremspedal (14) über elektrische Leitungen gesteuerte Betätigungsvorrichtung, die als ein an einem Bremssattel (5) eines jeden Rades des Kraftfahrzeuges montierter elektromechanischer Radbremsaktor (4) ausgebildet ist, eine zylindrische Bohrung (19) als Teil des Radbremsaktors (4), in der ein Bremskolben (20) bei einer Bremsbetätigung über einen Spindeltrieb (34,36) axial geführt verschiebbar und gegen einen Bremsbelag (23;25) andrückbar ist,
- zwischen dem Spindeltrieb (34,36) und dem Bremskolben (20) eine die Bremskraft verstärkende hydraulische Übersetzungseinrichtung in Form eines vollständig gekapselten Fluidgetriebes (42-46) mit einer ein Fluidvolumen (43) einschließenden sackartigen geschlossenen Membran (44),
- eine, insbesondere flaschenhalsartige, Membran-Einfüllöffnung (44.1;44.2;44.3;44.4), die an Außenumfang eines von dem Spindeltrieb (34,36) axial, insbesondere in einem Gehäuseboden (45) eines Bremssattelgehäuses (18), verschiebbaren Spindelkolbens (42) befestigbar ist.

2. Elektromechanische Kraftfahrzeug-Bremsvorrichtung nach Anspruch 1, enthaltend
- eine Ausbildung der Membran-Einfüllöffnung (44.1;44.2; 44.3;44.4) nach Art eines Falt- bzw. Rollbalges mit einem gegenüber einem radial äußeren bremsgehäuseteilseitigen Membran-Wandteil (44.1) zurückfaltbaren, radial inneren parallelen, axial mit dem Spindelkolben (42) axial bewegbaren spindelkolbenseitigen Wandteil (44.2).

3. Elektromechanische Bremsvorrichtung nach Anspruch 2, enthaltend
- ein bremskolbenseitiges, insbesondere formschlüssig am Umfang des Spindelkolbens (42) fixierbares, Befestigungsende (44.3) am freien Ende des bremskolbenseitigen Wandteils (44.2).

4. Elektromechanische Kraftfahrzeug-Bremsvorrichtung nach Anspruch 2 und/oder 3, enthaltend
- einen außenumfangsseitig radial abgesetzten Spindelkolben (42) mit einem ersten bremsseitigen radial weiteren, nur einen von einer Umknickung freien Wandteil (44.4) der Einfüllöffnung gegen den Gehäuseboden (45) anlegenden Spindelkolbenteil (42.2) und mit einem radial engeren, sowohl den äußeren bremsgehäuseteilseitigen Membranteil (44.1) als auch den dazu parallelen, zurückgefalteten bzw. zurückgerollten bremskolbenseitigen Wandteil (44.2) gegen den Gehäuseboden (45) anlegenden Spindelkolbenteil (42.3).

5. Elektromechanische Kraftfahrzeug-Bremsvorrichtung nach zumindest einem der Ansprüche 1 bis 4, enthaltend
- eine axiale Einfüllbohrung (42.1) für das Fluidvolumen (43) in dem Spindelkolben (42) mit einer spindeltriebseitigen, nach einer Fluid-Beschickung der Membran (44) verschließbaren, Beschickungsöffnung einerseits und einer Ausgangsöffnung zu dem Membran-Innenraum andererseits.

6. Elektromechanische Kraftfahrzeug-Bremsvorrichtung nach zumindest einem der Ansprüche 2 bis 5, enthaltend
- eine nichteinstückige, insbesondere gegenseitig verschraubbare, Verbindung zwischen dem Spindelkolben (42) einerseits und der Spindel (36) des Spindeltriebs (34,36) andererseits.

7. Elektromechanische Kraftfahrzeug-Bremsvorrichtung nach zumindest einem der Ansprüche 1 bis 6, enthaltend
- eine einen Bremsbelagverschleiß selbsttätig ausgleichende Nachstellvorrichtung (52;56;57;58) zwischen dem Fluidgetriebe (42-46) einerseits und dem Bremskolben (20) andererseits.

8. Elektromechanische Kraftfahrzeug-Bremsvorrichtung nach Anspruch 7, enthaltend
- eine Abstützung des Fluidvolumens (43) spindeltriebseitig an dem Gehäuseboden (45) des Bremssattelgehäuses (18) und der membranseitigen Stirnfläche des Spindelkolbens (42) einerseits bzw. bremsseitig an dem Bremskolben (20) andererseits.

9. Elektromechanische Kraftfahrzeug-Bremsvorrichtung nach Anspruch 8, enthaltend
- eine bremsseitige Abstützung des Fluidvolumens (43) an der selbsttätigen Nachstellvorrichtung (51), insbesondere an einer Druckplatte (46) eines Übertragerteus (51) der selbsttätig ausgleichenden Machstellvorrichtung.

## Claims

1. Electromechanical vehicle brake device, containing
- an actuating device controlled from a brake pedal (14) via electric cables, that is designed as an electromechanical wheel-brake actuator (4) mounted on a brake calliper (5) of each wheel of the vehicle,
- a cylindrical bore (19) as part of the wheel-brake actuator (4) into which a brake piston (20) can be axially slid by means of a spindle drive (34, 36) on a brake actuation and which can be pressed against a brake lining (23; 25),
- between the spindle drive (34, 36) and the brake piston (20), a brake force-intensifying hydraulic pressure intensifier in the form of a completely enclosed hydraulic transmission (42-46) with bag-type closed diaphragm (44) enclosing a fluid volume (43),
- a particularly bottleneck-type, diaphragm charging opening (44.1; 44.2; 44.3; 44.4), that can be secured to the outer circumference of a spindle piston (42) that can be axially slid by the spindle drive (34, 36), particularly in a housing base (45) of a brake calliper housing (18).

2. Electromechanical vehicle brake device according to Claim 1, containing
- a version of a diaphragm charging opening (44.1; 44.2; 44.3; 44.4) of a folding or rolling bellows type with a radial inner parallel wall part (42.2) at the spindle piston side, axial with the spindle piston (42), that can be folded back relative to a radial outer diaphragm part (44.1) at the brake housing side and can be moved axially.

3. Electromechanical brake device according to Claim 2, containing,
- a brake piston side attaching end (44.3) on the free end of the brake piston side wall part (44.2), that can in particular be attached with a positive attachment on the circumference of the spindle piston (42).

4. Electromechanical vehicle brake device according to Claim 2 and/or Claim 3, containing
- a spindle piston (42) radially shouldered in its outer circumference with a first radially-wider spindle piston part (42.2) at its brake end abutting only one foldback-free wall part (44.4) of the charging opening against the housing base (45), and with a radially-narrower spindle piston part (42.3) abutting both the outer brake housing part end diaphragm part (44.1) and the brake housing end wall part (44.2), parallel to it, folded or rolled back, against the housing base (45).

5. Electromechanical vehicle brake device in accordance with at least one of Claims 1 to 4, containing
- an axial charging bore (42.1) for the fluid volume (43) in the spindle piston (42) with a spindle drive end charging opening that can be sealed after the fluid charging of the diaphragm (44) and also an outlet opening to the diaphragm inner chamber.

6. Electromechanical vehicle brake device in accordance with at least one of Claims 2 to 5, containing
- a non-single-piece, connection, particularly one that can be screwed together, between the spindle piston (42) on the one hand and the spindle (36) of the spindle drive (34, 36) on the other.

7. Electromechanical vehicle brake device in accordance with at least one of Claims 1 to 6, containing
- an adjusting device (52; 56; 57; 58) between the hydraulic transmission (42-46) and the brake piston (20) for automatic compensation of brake lining wear.

8. Electromechanical vehicle brake device according to Claim 7, containing
- a support of the fluid volume (43) at the spindle drive end against the housing base (45) of the brake calliper housing (18) and at the diaphragm end against the front face of the spindle piston (42) on the one hand or against the brake piston (20) at the brake end on the other.

9. Electromechanical vehicle brake device according to Claim 8, containing
- a support of the fluid volume (43) at the brake end against the automatic adjusting device (51), particularly against a pressure plate (46) of a transmission part (51) of the automatic compensating adjusting device.

## Revendications

1. Dispositif de freinage électromécanique de véhicule à moteur, comprenant
- un dispositif d'actionnement commandé par une pédale de frein (14) par l'intermédiaire de lignes électriques, ce dispositif étant agencé sous forme d'actionneur électromécanique de frein sur roue (4) monté sur un étrier (5) de chaque roue du véhicule,
- un alésage cylindrique (19) faisant partie de l'actionneur de frein sur roue (4) et dans lequel un piston de frein (20) est guidé pour un déplacement axial lors d'une application de frein, par l'intermédiaire d'un entraîneur à tige filetée (34, 36), et peut être poussé contre une garniture de frein (23; 25),
- un dispositif hydraulique de multiplication amplifiant la force de freinage, disposé entre l'entraîneur à tige filetée (34, 36) et le piston de frein (20), ce dispositif étant sous forme d'un entraînement hydraulique complètement encapsulé (42-46) et contenant une membrane à sac fermée (44) renfermant un volume de fluide (43),
- une ouverture de remplissage de membrane (44.1; 44.2; 44.3; 44.4), en particulier sous forme de goulot de bouteille, pouvant être fixée sur le pourtour extérieur d'un piston de tige filetée (42) pouvant être déplacé axialement par l'entraîneur à tige filetée (34, 36), en particulier dans le fond (45) d'un boîtier d'étrier de frein (18).

2. Dispositif de freinage électromécanique de véhicule à moteur selon la revendication 1, comprenant
- un agencement de l'ouverture de remplissage de membrane (44.1; 44.2; 44.3; 44.4) sous forme d'un soufflet plié ou roulé, comportant une partie de paroi (44.2) radialement intérieure et dirigée vers le piston de tige filetée et axialement mobile avec ce piston de tige filetée (42), cette partie pouvant être pliée contre une partie de paroi de la membrane (44.1) radialement extérieure, située du côté du boîtier de frein.

3. Dispositif de freinage électromécanique de véhicule à moteur selon la revendication 2, comprenant
- une extrémité de fixation (44.3) situé du côté du piston de frein et sur l'extrémité libre de la partie de paroi du côté du piston de frein (44.2), et pouvant être fixée en particulier par engagement de forme au pourtour du piston de tige filetée (42).

4. Dispositif de freinage électromécanique de véhicule à moteur selon la revendication 2 et/ou 3, comprenant
- un piston de tige filetée (42) radialement étagé sur son pourtour extérieur, ayant une première partie radialement plus large(42.2), située du côté du frein, plaçant une partie de la paroi de l'ouverture de remplissage de membrane (44.4) exempte de pliage contre le fond du boîtier (45), et une partie radialement moins large (42.3) plaçant et la partie extérieure de la membrane (44.1) située du côté du boîtier de frein et la partie de paroi parallèle pliée ou roulée en arrière (44.2), contre le fond du boîtier (45).

5. Dispositif de freinage électromécanique de véhicule à moteur selon au moins l'une des revendications 1 à 4, comprenant
- un alésage de remplissage axial (42.1) pour le volume de fluide (43) pratiqué dans le piston de tige filetée (42), comportant une ouverture d'alimentation située du côté de l'entraîneur à tige filetée et pouvant être fermée après le remplissage de la membrane avec le fluide, et une ouverture de sortie allant vers l'espace intérieur de la membrane.

6. Dispositif de freinage électromécanique de véhicule à moteur selon au moins l'une des revendications 2 à 5, comprenant
- un raccordement à plus d'une pièce, en particulier à contre-vissage, entre le piston de tige filetée (42) d'une part et la tige filetée (36) de l'entraîneur à tige filetée (34, 36) d'autre part.

7. Dispositif de freinage électromécanique de véhicule à moteur selon au moins l'une des revendications 1 à 6, comprenant
- un dispositif de rattrapage (52; 56; 57; 58) pour l'égalisation automatique d'une usure de la garniture de frein, situé entre l'entraînement hydraulique (42-46) d'une part, et le piston de frein (20) d'autre part.

8. Dispositif de freinage électromécanique de véhicule à moteur selon la revendication 7, comprenant
- un appui du volume de fluide (43) du côté de l'entraîneur à tige filetée contre le fond (45) du boîtier d'étrier de frein (18) et la face frontale du côté de la membrane du piston de tige filetée (42), d'une part, et du coté du frein, contre le piston de frein (20) d'autre part.

9. Dispositif de freinage électromécanique de véhicule à moteur selon la revendication 8, comprenant
- un appui du volume de fluide (43) du côté du frein contre le dispositif automatique de rattrapage (51), en particulier contre une plaque d'appui (46) d'une pièce de transfert (51) du dispositif automatique de rattrapage.
